# EUROPÄISCHE PATENTSCHRIFT

(11) **EP 1 386 121 B1**
(45) Veröffentlichungstag und Bekanntmachung des Hinweises auf die Patenterteilung: **06.04.2005**
(21) Anmeldenummer: 02745243.2
(22) Anmeldetag: 19.04.2002
(51) Int. Cl.: G01B 5/12

(54) **SELBSTZENTRIERENDER FÜHLHEBELTASTER**
SELF-CENTRING PROBE
PALPEUR A LEVIER A CENTRAGE AUTOMATIQUE

(30) Priorität: 26.04.2001 DE 10120363
(43) Veröffentlichungstag der Anmeldung: 04.02.2004
(73) Patentinhaber: Knäbel, Horst, Dipl.-Ing., D-40667 Meerbusch (DE)
(72) Erfinder: Knäbel, Horst, Dipl.-Ing., D-40667 Meerbusch (DE)
(74) Vertreter: Wolff, Felix, Dr.
(86) Internationale Anmeldenummer: PCT/EP2002/004338
(87) Internationale Veröffentlichungsnummer: WO 2002/088625

(56) Entgegenhaltungen:
- DE-U- 20 107 175
- JP-A- 58 035 401
- US-A- 4 146 968
- US-A- 4 843 722
- US-A- 4 866 855
- US-A- 5 548 901

## Beschreibung

Die Erfindung bezieht sich auf eine Vorrichtung zur Überprüfung der Maß-, Formund/oder Lagetoleranzen einer rotationssymmetrischen Ausnehmung eines Werkstückes, bestehend aus einem Grundkörper mit einer einen Meßdom aufnehmenden Halterung und einem Meßwertaufnehmer, wobei der Meßdorn an seinem in die Ausnehmung eintauchenden Ende mit mindestens einem Tastelement versehen ist.
Es sind Vorrichtungen zur Überprüfung des Innendurchmessers bzw. der Toleranzen einer Bohrung eines Werkstückes bekannt, die aus einem Meßdom bestehen, der an seinem in die Bohrung einführbaren Ende mit beispielsweise zwei beweglichen, sich diametral gegenüberliegenden Tastelementen versehen ist, während das andere Ende von einem Grundkörper aufgenommen wird. Dieser Grundkörper enthält einen Meßwertaufnehmer, der die radiale Bewegung der Tastelemente über mindestens einen Mechanismus in eine axiale Bewegung umwandelt, die dann von dem Meßwertaufnehmer erfaßt, angezeigt oder an eine Auswerteinheit bzw. einen Meßrechner übertragen wird. Aus der ermittelten Wegänderung gegenüber einer vorherigen Kalibrierung mit einem sogenannten Einstellmeister ergibt sich der Meßwert, der die Abweichung zur zu kontrollierenden Bohrung darstellt.

Bei diesen Vorrichtungen wird die unvermeidbare Reibung bei der Umlenkung der radialen Tastelementenbewegung in die axiale Wirkrichtung des Meßwertaufnehmers als nachteilig angesehen, die sich nicht nur hinsichtlich des Verschleißes, sondern auch in Folge der damit verbundenen Hysterse negativ auf die Meß- und Reproduzierbarkeit auswirkt.

Es sind aber auch Vorrichtungen bekannt geworden, bei denen keine Umlenkung erforderlich ist, da der Grundkörper eine genau festgelegte, rechtwinklig zur Bohrungsachse verlaufende zyklische Bewegung ausführt und das Tastelement am Ende des Meßdorns dabei nacheinander zwei Wandungsseiten der Bohrung diametral antastet. Die Summe der dabei in beiden Richtungen festgestellten Zurückweichung des Tastelementes wird vom Weg des Grundkörpers subtrahiert und ergibt so das Maß des Bohrungsdurchmessers in dieser Ebene.

Um den Durchmesser einer Bohrung exakt zu bestimmen, ist es erforderlich, daß die Linie zwischen den Tastpunkten genau durch die Achse der Bohrung verläuft. Ist dies nicht der Fall, so wird nicht der Durchmesser, sondern ein vom Durchmessermaß abweichender Wandungsabstand gemessen. Der dabei entstehende, sogenannte Mittenversatzfehler ist um so größer, je kleiner die zu messende Bohrung und je größer der Abstand zwischen der Tastlinie und der Bohrungsachse ist.

Um diesen Fehler möglichst klein halten zu können, ist bei den bekannten Vorrichtungen eine konzentrische Führung des Meßdorns bzw. eine genaue Ausrichtung des Taststiftes in der Bohrung unbedingt erforderlich. Dies ist insbesondere bei kleinen Bohrungen in größerer Tiefe nahezu unmöglich zu erreichen.

Der Erfindung liegt deshalb die Aufgabe zugrunde, eine Vorrichtung zu schaffen, bei der das Tastelement sich ohne Zuhilfenahme von zusätzliche Hilfsmitteln selbst zentrieren kann.

Zur Lösung dieser Aufgabe wird gemäß der Erfindung bei einer Vorrichtung der eingangs beschriebenen Gattung vorgeschlagen, daß das Tastelement vier sich paarweise gegenüberliegende Tastpunkte aufweist und nacheinander mit jeweils zwei Tastpunkten an zwei sich gegenüberliegenden Seiten der Wandung der Ausnehmung zum Anliegen bringbar ist.

Durch eine solche Ausgestaltung des Tastelementes ist der Meßdom an seinem Meß- bzw. Tastende selbstzentrierend. Ein sogenannter Mittenversatz des Meßdornes kann nicht mehr auftreten, so daß sehr genaue Prüf- bzw. Überprüfungsergebnisse ermittelt werden.

Die Erfindung wird nachfolgend anhand eines in einer Zeichnung dargestellter Ausführungsbeispiele näher erläutert. Dabei zeigen
Fig. 1 eine Aufrißdarstellung einer erfindungsgemäßen Vorrichtung,
Fig. 2 bis 8 unterschiedliche Ausgestaltungen des Tastelementes.
Fig. 9 einen Schnitt einer gegenüber der Fig.1 abgeänderte Ausführung einer Vorrichtung gemäß der Erfindung,
Fig. 10 eine weitere Ausgestaltung einer Vorrichtung gemäß der Erfindung im Schnitt,
Fig.11 eine gegenüber der Fig.9 abgeänderte Ausführung einer Vorrichtung gemäß der Erfindung und
Fig.12 eine gegenüber der Fig. 10 geänderte Ausführungsform einer Vorrichtung gemäß der Erfindung

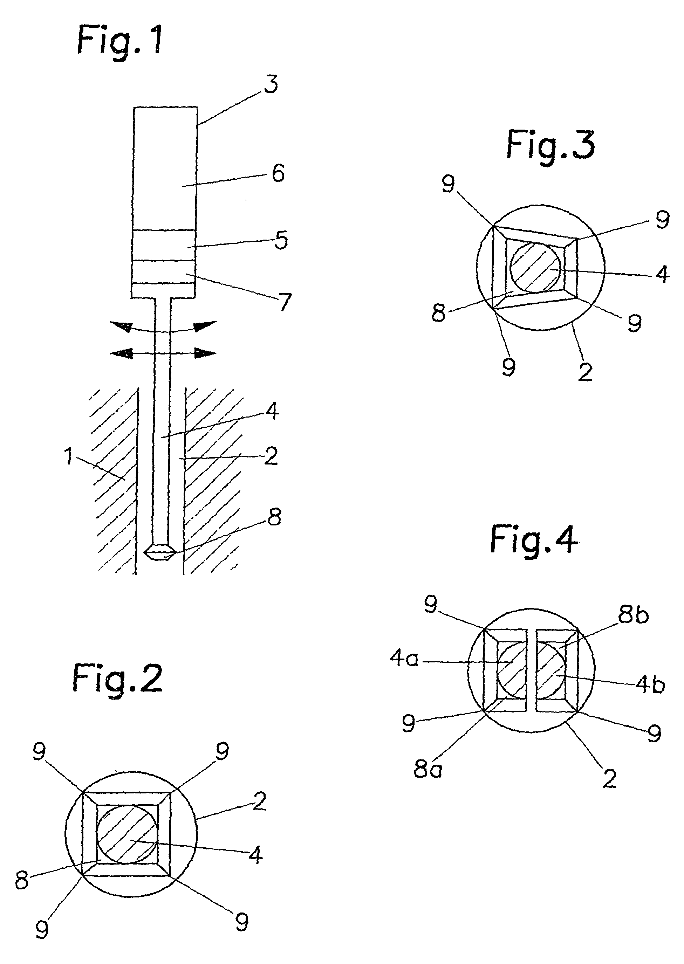

In der Fig.1 der Zeichnung ist eine Vorrichtung in vereinfachter Weise dargestellt, die zur Überprüfung der Maße bzw. Maß-, Form- und/oder Lagetoleranzen einer rotationssymmetrischen Ausnehmung 2 in einem Werkstück dient.

Die rotationssymmetrische Ausnehmung 2 kann als Durchgangs- oder Sacklochbohrung ausgebildet sein und besitzt beispielsweise einen Durchmesser von 1,5 bis 8 mm bei einer Länge bzw. Tiefe von 50 bis 150 mm. Für die Überprüfung wird eine Vorrichtung 3 verwendet, die zunächst aus einem Meßdorn 4, einer Meßdornhalterung 5 und einem Grundkörper 6 besteht. Der Meßdorn 4 ist dabei so angeordnet, daß er entsprechend den eingezeichneten Doppelpfeilen entweder horizontal und damit rechtwinklig zur Achse der Ausnehmung 2 oder um eine rechtwinklig zur Ausnehmung 2 stehenden Achse geschwenkt werden kann. Die Bewegung des Meßdorns 4 kann dabei mittels eines Meßwertaufnehmers erfaßt und die entsprechenden Daten können an eine an sich bekannte, nicht dargestellte Meßoder Kontrolleinrichtung übertragen werden. Der Meßwertaufnehmer ist in der Fig.1 nicht gezeigt.

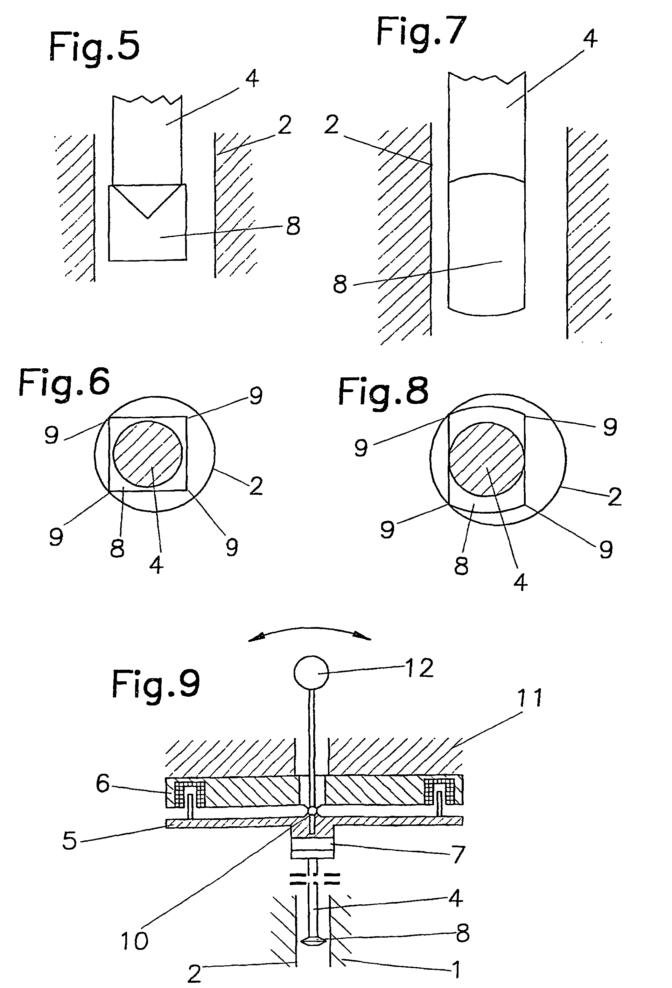

Der Meßdorn 4 ist an seinem freien Ende mit einem Tastelement 8 versehen. Die Meßdornhalterung 5 ist mit dem Meßdom 4 über eine Blattfeder 7 verbunden, die in Richtung der Pfeile biegesteif, aber rechtwinklig dazu sehr weich ist, so daß das Tastelement 8 quer zur Pfeilrichtung - d.h. quer zur Meßrichtung - ausweichen und damit sich selbst zentrieren kann. Das Tastelement 8 weist, wie die Figuren 2 bis 8 erkennen lassen, quer zur Längsachse des Meßdorns 4 eine symmetrische Form mit vier Tastpunkten 9 auf. Gemäß Fig. 2 der Zeichnung ist das Tastelement 8 einstückig ausgebildet und besitzt eine quadratische Grundfläche. Bei dem Ausführungsbeispiel der Fig. 3 ist das Tastelement 8 ebenfalls einstückig ausgebildet und besitzt eine trapezförmige Grundfläche. Gemäß der Fig. 4 ist das Tastelement 8 in zwei Einzelelemente 8a und 8b unterteilt, wobei beide Elemente 8a, 8b, je einem Meßdorn 4a und 4b und mit einem oder mit je einem Meßwertaufnehmer verbunden sind. Während die vorbeschriebenen Tastelemente 8 eine flächige Form mit beidseitiger Schräge aufweisen, sind in Fig. 5 bis 8 Tastelemente 8 dargestellt, deren Basiselement ein Zylinder bzw. eine beidseitig abgeflachte Kugel ist, bei denen auch nur vier Tastpunkte 9 mit der zu messenden Ausnehmung 2 des Werkstückes 1 in Berührung kommen.

In den Figuren 9 bis 11 der Zeichnung sind - allerdings nicht maßstabgerecht - Vorrichtungen gezeigt, die zur Betätigung des Meßdorns 4 und damit der Einwirkung des Tastelementes 8 auf die Wandung der zu messenden Ausnehmung 2 erforderlich sind. Bei der in Fig. 9 dargestellten Vorrichtung ist die Meßdornhalterung 5 des Meßdorns 4 über ein Drehgelenk 10 mit dem Grundkörper 6 verbunden. An den äußeren Enden der Meßdornhalterung 5 und des Grundkörpers 6 sind die Spulensysteme eines als induktes Wegmeßsystems ausgebildeten Meßwertaufnehmers angeordnet, die zu einer Halbbrücke verknüpft sind.

Während der Grundkörper 6 mit einem Stativ 11 verbunden ist, kann die Meßdornhalterung 5 über einen mit ihr verbundenen Stab 12 von Hand in Pfeilrichtung betätigt werden, so daß das Tastelement 8 nacheinander an zwei sich gegenüberliegenden Seiten die Wandung der Ausnehmung 2 angelegt werden kann. Die dabei entstehende Schrägstellung der Meßdornhalterung 5 wird über das Induktiv-Meßsystem erfaßt und die Differenz der beiden Eckwerte gibt Aufschluß über den Weg des Tastelementes 8 zwischen den gegenüberliegenden Seiten der Wandung der Ausnehmung 2.

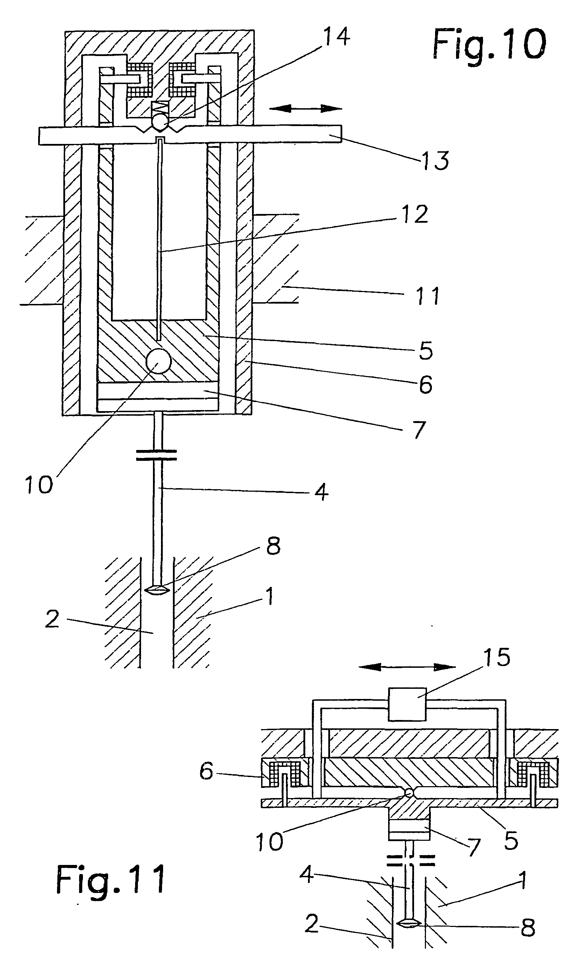

Da die über den Stab 12 eingeleitete Kraft proportional der Verbiegung des Meßdoms 4 ist, ist es erforderlich, diese Kraft möglichst gering und in beiden Richtungen gleich groß zu halten. Dazu wird erfindungsgemäß vorgeschlagen, den Stab 12 als Feder auszubilden und, wie in Fig. 10 dargestellt, dessen Auslenkung über einen Betätigungsbolzen 13 mit Raste 14 zu fixieren.

Eine andere Lösung einer Vorrichtung gemäß der Erfindung ist in Fig. 11 dargestellt. Hier wird über eine Verlagerung eines Gewichtes 15 die Meßdornhatterung 5 unsymmetrisch belastet. Das so aufgebaute Moment überträgt sich über den Meßdom 4 und das Tastelement 8, bevor es sich an der Wandung der Ausnehmung 2 abstützt.

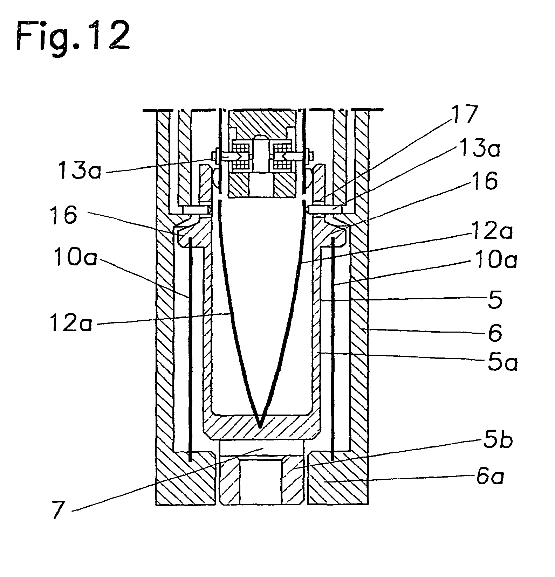

Die Fig. 12 der Zeichnung offenbart eine weitere Ausführungsform, die eine Abwandlung des Ausführungsbeispieles der Fig. 10 darstellt. Hier ist zunächst das Drehgelenk 10 der Fig. 10 durch zwei Blattfedern 10a ersetzt, die sich außerhalb der Meßdornhalterung 5 befinden und die mit ihren Enden einerseits in einem Vorsprung 16 der Meßdornhalterung 5 und andererseits in einem inneren Kragen 6a des Grundkörpers 6 fest eingesetzt sind. Die Meßdornhalterung 5 besteht aus einem Gehäuse 5a und einem Aufnahmekörper 5b für den Meßdom 4, die hier jedoch über zwei Blattfedern 7, die parallel zur Zeichnungsebene mit Abstand voneinander verlaufen, miteinander verbunden sind. Im Gehäuse 5a befinden sich zwei konkav zueinander geformte Blattfedern 12a, die die Funktion des Stabes 12 der Fig. 10 übernehmen. Diese Blattfedern 12a sind im Bodenbereich des Gehäuses 5a fest eingespannt. Die anderen Enden dieser Blattfedern 12a weisen einen geringen Abstand von der Innenwand des Gehäuses 5a auf. Hier ist jeder Blattfeder 12a ein im Gehäuse 5a geführter und pneumatisch beaufschlagbarer Kolben 13a zugeordnet, die die Funktion der Betätigungsstange 13 der Ausführungsform der Fig. 10 erfüllen und von denen jeweils nur ein Kolben 13a zur Vorspannung an einer Blattfeder 12a zum Anliegen gebracht werden kann. Diese Kolben 13a ragen jeweils durch eine Öffnung 17 der Meßdornhalterung 5.

## Patentansprüche

1. Vorrichtung zur Überprüfung der Maß-, Form- und/oder Lagetoleranzen einer rotationssymmetrischen Ausnehmung eines. Werkstückes, bestehend aus einem Grundkörper (6) mit einer einen Meßdorn (4) aufnehmenden Halterung (5) und aus einem Meßwertaufnehmer, wobei der Meßdorn (4) an seinem in die Ausnehmung eintauchenden Ende mit mindestens einem Tastelement (8) versehen ist, **dadurch gekennzeichnet, daß** das Tastelement (8) vier sich paarweise gegenüberliegende Tastpunkte (9) aufweist und nacheinander mit jeweils zwei Tastpunkten (9) an zwei sich gegenüberliegenden Seiten der Wandung der Ausnehmung (2) zum Anliegen bringbar ist.

2. Vorrichtung nach Anspruch 1, **dadurch gekennzeichnet, daß** das Tastelement (8) als rechteckige oder trapezförmige Platte mit beidseitigen Abschrägungen ausgebildet ist.

3. Vorrichtung nach Anspruch 1, **dadurch gekennzeichnet, daß** das Tastelement (8) als an zwei sich gegenüberliegenden Seiten abgeflachte Kugel oder senkrecht zur Achse des Meßdomes verlaufende Walze ausgebildet ist.

4. Vorrichtung nach einem der Ansprüche 1 bis 3, **dadurch gekennzeichnet, daß** das Tastelement (8) aus zwei jeweils zwei Tastpunkte (9) aufweisenden Teilen (8a,8b) gebildet ist.

5. Vorrichtung nach einem der Ansprüche 1 bis 4, **dadurch gekennzeichnet, daß** die Tastpunkte (9) des Tastelementes (8) abgerundet sind.

6. Vorrichtung nach einem der Ansprüche 1 bis 5, **dadurch gekennzeichnet, daß** der Abstand zwischen den Tastpunkten (9) des Tastelementes (8) rechtwinklig zur Bewegungsebene des Meßdornes (4) etwa 0,5 bis 0,9 des Durchmessers der Ausnehmung (2) beträgt.

7. Vorrichtung nach einem der Ansprüche 1 bis 6, **dadurch gekennzeichnet, daß** jeweils zwei Tastpunkte (9) des Tastelementes (9) rechtwinklig zur Bewegungsebene des Meßdornes (4) spiegelbildlich zueinander angeordnet ist.

8. Vorrichtung nach einem der Ansprüche 1 bis 7, **dadurch gekennzeichnet, daß** der Meßdorn (4) über eine in der Bewegungsebene des Meßdornes (4) verlaufende Blattfeder (7) mit der Meßdomhalterung (5) verbunden ist.

9. Vorrichtung nach Anspruch 8, **dadurch gekennzeichnet, daß** der Meßdorn (4) über zwei mit Abstand voneinander angeordnete Blattfedem (7) mit der Meßdornhalterung (5) verbunden ist.

10. Vorrichtung nach einem der Ansprüche 1 bis 9, **dadurch gekennzeichnet, daß** die Meßdornhalterung (5) über ein als Kreuzfedergelenk ausgebildetes Drehgelenk (10) mit dem Grundkörper (6) verbunden ist.

11. Vorrichtung nach einem der Ansprüche 1 bis 9, **dadurch gekennzeichnet, daß** die Meßdomhalterung (5) über ein Federparallelogramm (10a) mit dem Grundkörper (6) verbunden ist.

12. Vorrichtung nach einem der Ansprüche 1 bis 11, **dadurch gekennzeichnet, daß** das Tastelement (8) über einen durch mindestens eine Blattfeder gebildeten Stab (12) an der Wandung der Ausnehmung (9) anlegbar ist.

13. Vorrichtung nach Anspruch 112, **dadurch gekennzeichnet, daß** der Stab (12) über eine Betätigungsstange (13) mit Raste (14) in seiner Vorspannung fixierbar ist.

14. Vorrichtung nach Anspruch 12, **dadurch gekennzeichnet, daß** der Stab (12) durch zwei konkav zueinander verlaufende und im Bodenbereich der Meßdornhalterung (5) eingespannte Blattfedern (12a) gebildet ist.

15. Vorrichtung nach Anspruch 14, **dadurch gekennzeichnet, daß** jeder Blattfeder (12a) ein als Betätigungsstange (13) wirkendes Stellglied zugeordnet ist.

16. Vorrichtung nach Anspruch 15, **dadurch gekennzeichnet, daß** jedes Stellglied durch einen pneumatisch beaufschlagbaren Kolben (13a) gebildet ist.

17. Vorrichtung nach einem der Ansprüche 1 bis 9, **dadurch gekennzeichnet, daß** das Tastelement (8) über ein Gewicht (15) an der Wandung der Ausnehmung (9) anlegbar ist.

18. Vorrichtung nach einem der Ansprüche 1 bis 17, **dadurch gekennzeichnet, daß** die Meßdornhalterung (5) stabförmig ausgebildet und senkrecht zur Achse des Meßdomes (8) angeordnet ist.

19. Vorrichtung nach einem der Ansprüche 1 bis 17, **dadurch gekennzeichnet, daß** die Meßdornhalterung (5) U-förmig ausgebildet ist und deren Schenkel parallel zum Meßdorn (8) verlaufen.

## Claims

1. Device for testing dimensional, form and/or positional tolerances of a rotationally symmetrical aperture of a workpiece, consisting of a basic body (6) having a holder (5) accommodating a gauging pin (4) and of a measuring sensor, the gauging pin (4) being provided with at least one feeler element (8) on its end projecting into the aperture, **characterized in that** the feeler element (8) has four feeler points (9) opposite one another in pairs and can successively be brought to bear with in each case two feeler points (9) against two opposite sides of the wall of the aperture (2).

2. Device according to Claim 1, **characterized in that** the feeler element (8) is designed as a rectangular or trapezoidal plate having bevels on both sides.

3. Device according to Claim 1, **characterized in that** the feeler element (8) is designed as a ball truncated on two opposite sides or as a roller running perpendicularly to the axis of the gauging pin.

4. Device according to one of Claims 1 to 3, **characterized in that** the feeler element (8) is formed from two parts (8a, 8b) having two feeler points (9) in each case.

5. Device according to one of Claims 1 to 4, **characterized in that** the feeler points (9) of the feeler element (8) are rounded off.

6. Device according to one of Claims 1 to 5, **characterized in that** the distance between the feeler points (9) of the feeler element (8) at right angles to the plane of movement of the gauging pin (4) is about 0.5 to 0.9 of the diameter of the aperture (2).

7. Device according to one of Claims 1 to 6, **characterized in that** in each case two feeler points (9) of the feeler element (8) are arranged in mirror image relative to one another at right angles to the plane of movement of the gauging pin (4).

8. Device according to one of Claims 1 to 7, **characterized in that** the gauging pin (4) is connected to the gauging-pin holder (5) via a leaf spring (7) running in the plane of movement of the gauging. pin (4).

9. Device according to Claim 8, **characterized in that** the gauging pin (4) is connected to the gauging-pin holder (5) via two leaf springs (7) arranged at a distance from one another.

10. Device according to one of Claims 1 to 9, **characterized in that** the gauging-pin holder (5) is connected to the basic body (6) via a revolute joint (10) designed as a flexural pivot.

11. Device according to one of Claims 1 to 9, **characterized in that** the gauging-pin holder (5) is connected to the basic body (6) via a spring parallelogram (10a).

12. Device according to one of Claims 1 to 11, **characterized in that** the feeler element (8) can be applied to the wall of the aperture (2) by at least one rod (12) designed as a leaf spring.

13. Device according to Claim 12, **characterized in that** the rod (12) can be fixed in its prestress via an actuating bar (13) having a catch (14).

14. Device according to Claim 12, **characterized in that** the rod (12) is formed by two leaf springs (12a) running concavely relative to one another and clamped in place in the base region of the gauging-pin holder (5).

15. Device according to Claim 14, **characterized in that** an actuator acting as actuating bar (13) is assigned to each leaf spring (12a).

16. Device according to Claim 15, **characterized in that** each actuator is formed by a piston (13a) which can be acted upon pneumatically.

17. Device according to one of Claims 1 to 9, **characterized in that** the feeler element (8) can be applied to the wall of the aperture (2) via a weight (15).

18. Device according to one of Claims 1 to 17, **characterized in that** the gauging-pin holder (5) is of rod-shaped design and is arranged perpendicularly to the axis of the gauging pin (4).

19. Device according to one of Claims 1 to 17, **characterized in that** the gauging-pin holder (5) is of U-shaped design and its legs run parallel to the gauging pin (4).

## Revendications

1. Dispositif pour contrôler les tolérances de cote, de forme et/ou de position d'un creux à symétrie rotationnelle d'une pièce, composé d'un corps de base (6) avec un support (5) recevant un tampon à limites (4) et d'un enregistreur de valeur mesurée, le tampon à limites (4) étant muni d'au moins un élément de palpage (8) à son extrémité qui pénètre dans le creux, **caractérisé en ce que** l'élément de palpage (8) présente quatre points de palpage (9) opposés par paire et peut être appliqué successivement à chaque fois avec deux points de palpage (9) sur deux côtés opposés de la paroi du creux (2).

2. Dispositif selon la revendication 1, **caractérisé en ce que** l'élément de palpage (8) est réalisé sous la forme d'une plaquette rectangulaire ou trapézoïdale avec des biseautages de chaque côté.

3. Dispositif selon la revendication 1, **caractérisé en ce que** l'élément de palpage (8) est réalisé sous la forme d'une bille aplatie sur deux faces opposées ou sous la forme d'un rouleau perpendiculaire à l'axe du tampon à limites.

4. Dispositif selon l'une des revendications 1 à 3, **caractérisé en ce que** l'élément de palpage (8) est formé de deux parties (8a, 8b) présentant chacune deux points de palpage (9).

5. Dispositif selon l'une des revendications 1 à 4, **caractérisé en ce que** les points de palpage (9) de l'élément de palpage (8) sont arrondis.

6. Dispositif selon l'une des revendications 1 à 5, **caractérisé en ce que** l'écart entre les points de palpage (9) de l'élément de palpage (8) perpendiculairement au plan de déplacement du tampon à limites (4) est compris entre environ 0,5 à 0,9 fois le diamètre du creux (2).

7. Dispositif selon l'une des revendications 1 à 6, **caractérisé en ce que** deux points de palpage (9) de l'élément de palpage (8) sont à chaque fois disposés en miroir l'un par rapport à l'autre perpendiculairement au plan de déplacement du tampon à limites (4).

8. Dispositif selon l'une des revendications 1 à 7, **caractérisé en ce que** le tampon à limites (4) est relié au support de tampon à limites (5) par le biais d'un ressort à lames (7) qui s'étend dans le plan de déplacement du tampon à limites (4).

9. Dispositif selon la revendication 8, **caractérisé en ce que** le tampon à limites (4) est relié au support de tampon à limites (5) par le biais de deux ressorts à lames (7) écartés l'un de l'autre.

10. Dispositif selon l'une des revendications 1 à 9, **caractérisé en ce que** le support de tampon à limites (5) est relié au corps de base (6) par le biais d'une articulation tournante (10) réalisée sous la forme d'un ressort croisé.

11. Dispositif selon l'une des revendications 1 à 9, **caractérisé en ce que** le support de tampon à limites (5) est relié au corps de base (6) par le biais d'un parallélogramme à ressort (10a).

12. Dispositif selon l'une des revendications 1 à 11, **caractérisé en ce que** l'élément de palpage (8) peut être appliqué sur la paroi du creux (2) par le biais d'au moins une baguette (12) réalisée sous la forme d'un ressort à lames.

13. Dispositif selon la revendication 12, **caractérisé en ce que** la baguette (12) peut être bloquée dans sa position de précontrainte par le biais d'une tige de commande (13) munie d'un cliquet (14).

14. Dispositif selon la revendication 12, **caractérisé en ce que** la baguette (12) est formée par deux ressorts à lames (12a) concaves l'un par rapport à l'autre et arrimés dans la zone du fond du support de tampon à limites (5).

15. Dispositif selon la revendication 14, **caractérisé en ce qu'**un élément de commande réalisé sous la forme d'une tige de commande (13) est associé à chaque ressort à lames (12a).

16. Dispositif selon la revendication 15, **caractérisé en ce que** chaque élément de commande est formé par un piston à commande pneumatique (13a).

17. Dispositif selon l'une des revendications 1 à 9, **caractérisé en ce que** l'élément de palpage (8) peut être appliqué sur la paroi du creux (2) par un poids (15).

18. Dispositif selon l'une des revendications 1 à 17, **caractérisé en ce que** le support de tampon à limites (5) est réalisé en forme de baguette et disposé perpendiculairement à l'axe du tampon à limites (4).

19. Dispositif selon l'une des revendications 1 à 17, **caractérisé en ce que** le support de tampon à limites (5) est réalisé en forme de U et ses branches s'étendent parallèlement au tampon à limites (4).
